# EUROPÄISCHE PATENTANMELDUNG

(11) **EP 2 595 016 A1**
(43) Veröffentlichungstag der Anmeldung: **22.05.2013**
(21) Anmeldenummer: 11189615.5
(22) Anmeldetag: 17.11.2011
(51) Int. Cl.: G05B 19/042

(54) **Verfahren, Computerprogramm, computerlesbares Medium und Recheneinheit zur Bedienung von Feldgeräten**

(71) Anmelder: VEGA Grieshaber KG, 77709 Wolfach (DE)
(72) Erfinder: Faist, Fridolin, 77709 Oberwolfach (DE); Wettlin, Martin, 77761 Schiltach (DE)
(74) Vertreter: Maiwald Patentanwalts GmbH

(57) **Zusammenfassung**

Zum Bedienen eines Feldgerätes in der Prozessautomation erfolgt eine automatische zyklische Überwachung einer Kommunikationsschnittstelle einer Recheneinheit. Wird ein Feldgerät an diese Kommunikationsschnittstelle angeschlossen, so wird dies automatisch festgestellt. Danach wird eine Feldgerätebediensoftware automatisch gestartet, wenn das Feldgerät der Feldgerätebediensoftware zugeordnet werden kann. Nach Start der Bediensoftware erfolgt eine automatische Bestimmung des passenden Gerätetreibers, der dann hochgeladen wird. Hierdurch wird die Bedienung von Feldgeräten, insbesondere in komplexen Feldgerätenetzwerken, in hohem Maße erleichtert.

## Beschreibung

### Gebiet der Erfindung

Die Erfindung betrifft die Prozessautomation. Insbesondere betrifft die Erfindung ein Verfahren zum Bedienen, zur Inbetriebnahme und/oder zur Wartung eines Feldgerätes, ein oder mehrere Programmelemente und ein computerlesbares Medium sowie eine Recheneinheit.

### Technologischer Hintergrund

Die Inbetriebnahme, Wartung oder Bedienung von Feldgeräten erfolgt oft rechnergestützt. Beispielsweise wird über eine Schnittstelle am Feldgerät entweder direkt, z. B. über einen USB-Port, oder indirekt über einen Kommunikationsadapter, der zwischen das Feldgerät und den Rechner geschaltet ist, eine Verbindung zwischen dem Feldgerät und dem Rechner hergestellt, um über diese Verbindung Parametrierungen und Diagnosen des Feldgerätes durchzuführen. Bei dem Rechner kann es sich um einen Personal Computer, ein Laptop oder einen anderen tragbaren Computer handeln. Im Folgenden wird dieser Rechner auch als Recheneinheit bezeichnet.

Der Anwender (Benutzer) kann ein bestimmtes Computerprogramm auf der Recheneinheit starten und den geeigneten Kommunikationstreiber aus einer Liste von Treibern auswählen und ein sog. "virtuelles Projekt" aufbauen. Dieses virtuelle Projekt simuliert den Aufbau des Feldgerätenetzwerkes, auch Topologie genannt, also die Verschaltung der einzelnen Komponenten des Netzwerkes miteinander.

Weiterentwickelte Produkte bieten dem Anwender nach dem Starten der Feldgerätebediensoftware einen Dialog an, um aus einer Liste von möglichen Verbindungsarten eine bestimmte Verbindungsart auszuwählen und ein automatisches Absuchen nach angeschlossenen Geräten auszulösen. Für die gefundenen Geräte wird dann das "virtuelle Projekt" aufgebaut und dem Anwender in einer komplexen Projektumgebung dargestellt. Um das angeschlossene Gerät über die Bediensoftware bedienen zu können, muss der Gerätetreiber nun im virtuellen Projekt angewählt und geöffnet werden. Erst jetzt erscheint die eigentliche Bedienoberfläche für das angeschlossene Feldgerät.

In anderen Worten muss der Anwender die Topologie des Feldgerätenetzwerkes auf dem Rechner nachbilden, bevor das Feldgerät in Betrieb genommen werden kann.

### Zusammenfassung der Erfindung

Es ist eine Aufgabe der Erfindung, eine vereinfachte Bedienung, Inbetriebnahme und/oder Wartung von Feldgeräten zu ermöglichen.

Diese Aufgabe wird durch die Merkmale der unabhängigen Patentansprüche gelöst. Weiterbildungen der Erfindung ergeben sich aus den Unteransprüchen und der folgenden Beschreibung.

An dieser Stelle sei darauf hingewiesen, dass die im Folgenden beispielsweise im Hinblick auf das Verfahren beschriebenen Schritte auch in den Programmelementen und dem computerlesbaren Medium implementiert werden können, und umgekehrt. Diese Verfahrensschritte können dann durch eine entsprechende Recheneinheit ausgeführt werden.

Gemäß einem ersten Aspekt der Erfindung ist ein Verfahren zum Bedienen eines Feldgerätes in der Prozessautomation angegeben. Insbesondere kann das Verfahren auch oder alternativ zur Inbetriebnahme und/oder zur Wartung des Feldgerätes ausgeführt sein. Gemäß einem weiteren Aspekt der Erfindung kann das Verfahren insbesondere zum Bedienen, zur Inbetriebnahme und/oder Wartung mehrerer Feldgeräte, die mittels eines Datenbusses in Form eines Feldgerätenetzwerkes miteinander verbunden sind, ausgeführt sein.

Die Kommunikation zwischen der Recheneinheit und dem Feldgerät/den Feldgeräten kann beispielsweise über einen Feldbus (HART, Foundation Fieldbus, Profibus, Modbus, usw.) erfolgen, für den Fall, dass an dem Bus nur ein Feldgerät angeschlossen ist. Auch die Verbindung über Ethernet kann genutzt werden, insbesondere in Form einer Punkt-zu-Punkt Verbindung. In diesem Fall kann genau die passende Bedienoberfläche automatisch geöffnet werden. Zwar würde das System an Feldbussen mit mehreren Sensoren diese Sensoren auch auffinden, und könnte in der Folge auch zu allen gefundenen Geräten die Bedienoberflächen öffnen, aber der Benutzer müsste dann immer noch entscheiden, welche der Bedienoberflächen zu welchem Gerät gehört.

Insbesondere interessant für das beschriebene Verfahren sind Verbindungen über USB, RS232 oder auch drahtlose Verbindungen zu einem Einzelgerät. Für diese Schnittstellen kommen üblicherweise private Protokolle zum Einsatz. Bei VEGA ist dies z. B. das VVO-Protokoll (VEGA Visual Operation).

Bei dem Feldgerät kann es sich beispielsweise um ein Füllstandmessgerät, wie ein Füllstandradar, ein Ultraschallgerät oder ein Messgerät, welches geführte Mikrowellen zur Füllstandmessung verwendet, handeln. Auch kann es sich um ein Druckmessgerät, ein Grenzstanderfassungsgerät, ein Temperaturmessgerät oder ein Durchflussmessgerät handeln.

Es erfolgt eine automatische zyklische Überwachung einer Kommunikationsschnittstelle der Recheneinheit durch ein entsprechendes Programmelement, welches auf der Recheneinheit ausgeführt wird. Die Recheneinheit stellt dabei automatisch fest, ob ein Feldgerät oder ein Kommunikationsgerät eines Feldgerätes an die Kommunikationsschnittstelle angeschlossen ist, welches einer Feldgerätebediensoftware auf der Recheneinheit zugeordnet werden kann.

Danach wird die Feldgerätebediensoftware automatisch ausgeführt, wenn das Feldgerät oder das Kommunikationsgerät der Feldgerätebediensoftware auf der Recheneinheit zugeordnet werden kann. Dann erfolgt ein automatisches Bestimmen eines für das angeschlossene, identifizierte Feldgerät passenden Gerätetreibers, der daraufhin zur Ausführung auf der Recheneinheit automatisch hochgeladen bzw. gestartet wird.

Wenn das Feldgerät demnach automatisch an der Kommunikationsschnittstelle der Recheneinheit als dort angeschlossen erkannt wird, wird der passende Gerätetreiber automatisch aktiviert, so dass dieser vom Anwender verwendet werden kann, um das Feldgerät in Betrieb zu nehmen, zu warten oder anderweitig zu konfigurieren bzw. zu parametrieren.

Gemäß einem weiteren Aspekt der Erfindung erfolgt die zyklische Überwachung der Kommunikationsschnittstelle und das Feststellen, ob ein Feldgerät bzw. ein Kommunikationsgerät eines Feldgerätes an die Schnittstelle angeschlossen ist, wobei das Feldgerät einer bestimmten Feldgerätebediensoftware auf der Recheneinheit zugeordnet werden kann, durch ein von der Feldgerätebediensoftware unabhängiges Programmelement.

Es sind also zwei getrennte Softwarekomponenten vorgesehen. Die erste Softwarekomponente ist die Feldgerätebediensoftware und die zweite Softwarekomponente, welche als Prozess oder Dienst permanent im Hintergrund laufen kann, dient der zyklischen Überwachung der Kommunikationsschnittstelle der Recheneinheit. Wurde ein Feldgerät erkannt, dann startet die zweite Softwarekomponente die eigentliche Bediensoftware und baut automatisch das passende virtuelle Projekt mit den zugehörigen Gerätetreibern auf. Im nächsten Schritt wird dann der Gerätetreiber des Feldgerätes geöffnet und die Gerätedaten werden automatisch in den Treiber geladen.

Gemäß einem weiteren Aspekt der Erfindung handelt es sich bei der Kommunikationsschnittstelle um eine USB-Schnittstelle, einen COM-Port oder eine Ethernet-Schnittstelle.

Gemäß einem weiteren Aspekt der Erfindung handelt es sich bei der Feldgerätebediensoftware um eine Software nach einem der Standards Field Device Tool (FDT), Electronic Device Description (EDD) oder Field Device Integration (FDI).

Die Gerätetreiber im Falle von FDT werden als Device Type Manager (DTM) und die Gerätetreiber für EDD werden als DDs bezeichnet.

Gemäß einem weiteren Aspekt der Erfindung ist ein Computerprogramm angegeben, welches eines oder mehrere Programmelemente aufweist, die, wenn sie auf einem Prozessor einer Recheneinheit ausgeführt werden, die Recheneinheit dazu veranlassen, die oben und/oder im Folgenden beschriebenen Verfahrensschritte durchzuführen.

Gemäß einem weiteren Aspekt der Erfindung ist ein computerlesbares Medium angegeben, auf dem ein Computerprogramm, welches sich aus einem oder mehreren Programmelementen zusammensetzt, gespeichert ist, welches, wenn es auf einem Prozessor einer Recheneinheit ausgeführt wird, die Recheneinheit dazu veranlasst, die oben und/oder im Folgenden beschriebenen Verfahrensschritte durchzuführen.

Dabei können die Programmelemente Teil einer Software sein, die auf einem Prozessor der Recheneinheit gespeichert ist. Der Prozessor kann ebenso Gegenstand der Erfindung sein. Weiterhin können die Programmelemente derart ausgeführt sein, dass sie schon von Anfang die Erfindung verwenden, oder derart, dass sie durch eine Aktualisierung (Update) ein bestehendes Programm zur Verwendung der Erfindung veranlassen.

Ein weiterer Aspekt der Erfindung betrifft eine Recheneinheit, auf der ein Computerprogramm bzw. Programmelemente gespeichert sind, durch welche das oben und/oder im folgenden beschriebene Verfahren ausgeführt werden kann.

Im Folgenden werden mit Verweis auf die Figuren Ausführungsbeispiele der Erfindung beschrieben.

### Kurze Beschreibung der Figuren

Fig. 1 zeigt eine Recheneinheit, die gemäß einem Ausführungsbeispiel der Erfindung direkt an ein Feldgerät angeschlossen ist.
Fig. 2 zeigt eine Recheneinheit, die gemäß einem weiteren Ausführungsbeispiel der Erfindung über einen Kommunikationsadapter an ein Feldgerät angeschlossen ist.
Fig. 3 zeigt die Topologie eines Projektes gemäß dem Aufbau der Fig. 1.
Fig. 4 zeigt die Topologie eines Projektes gemäß dem Aufbau der Fig. 2.
Fig. 5 zeigt ein Feldgerätenetzwerk gemäß einem weiteren Ausführungsbeispiel der Erfindung.
Fig. 6 zeigt ein Flussdiagramm eines Verfahrens gemäß einem Ausführungsbeispiel der Erfindung.

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente.

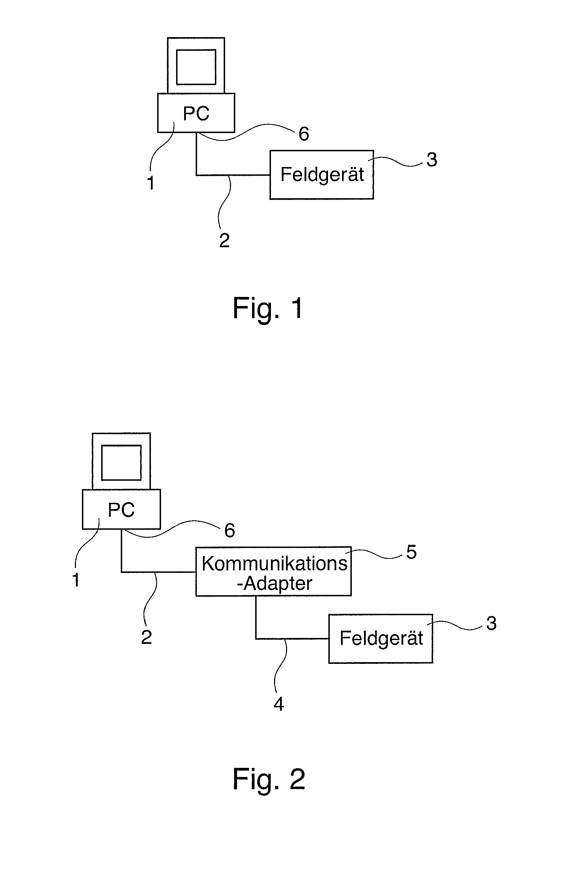

Fig. 1 zeigt eine Recheneinheit 1 in Form eines Personal Computers, eines Laptops oder eines anderen tragbaren Computers 1, welche über die Kommunikationsschnittstelle 6 und eine daran angeschlossene Datenleitung 2 an ein Feldgerät 3 angeschlossen ist. Bei dem Feldgerät kann es sich um ein Füllstandmessgerät, ein Druckmessgerät, ein Durchflussmessgerät, ein Grenzstanderfassungsmessgerät oder ein Temperaturmessgerät handeln.

Erfindungsgemäß ist es nicht erforderlich, dass der Anwender über umfangreiches Wissen und Know-how verfügt, um eine Feldgerätebediensoftware soweit einzurichten, dass über die projektierte Bustopologie (sog. virtuelles Projekt) der Zugriff auf das Feldgerät über die jeweiligen Bedienoberflächen ermöglicht wird. Dies ist nicht notwendig, damit er sich mit den einzelnen Feldgeräten nacheinander verbinden und die gewünschten Diagnosen und Parametrierungen durchführen kann.

Auch kann erfindungsgemäß vorgesehen sein, dass nach dem Öffnen des gewünschten Gerätetreibers (welches hier automatisch erfolgen kann) die Bedienoberfläche der eigentlichen Management- bzw. Konfigurations-Software nicht weiterhin offen bleibt. Hierdurch kann die Informationsmenge auf dem Bildschirm reduziert werden, so dass sich insbesondere ungeübtere Anwender auf die eigentliche Aufgabe konzentrieren können, nämlich genau das Feldgerät zu bearbeiten, für das die Inbetriebnahme, die Parametrierung und/oder die Wartung erfolgen soll.

Die Konzepte der heutigen Bedienoberflächen tragen verschiedenen Standards (FDT, EDD, FDI, usw.) Rechnung und sie bieten insbesondere in heterogenen Netzwerken mit vielen Sensoren den Spezialisten viele Freiheitsgrade. Bedenkt man aber, dass die Mehrzahl der installierten Feldgeräte in kleinen Anlagen bestehend aus zwei bis fünf Sensoren eingesetzt werden, so wird erkennbar, dass in diesen Anwendungsfällen diese Bedienkonzepte unnötig komplex sind.

Das erfindungsgemäße Verfahren nutzt die Vorteile der verschiedenen bereits bestehenden Bedienprogramme, wie z. B. FDT mit DTMs, jedoch werden verwirrende Elemente weggelassen und der Einstieg in die Bedienung erleichtert, indem die Notwendigkeit eines Projektaufbaus (sog. virtuelles Projekt) komplett entfallen kann.

Die Erfindung beschreibt ein Verfahren, Programmelemente, ein computerlesbares Medium und eine Recheneinheit zur Bedienung von Feldgeräten, wie Sensoren und Aktoren, in prozessverarbeitenden Systemen, wie sie heute typischerweise im industriellen Umfeld zum Einsatz kommen. Diese Systeme bestehen beispielsweise aus einem oder mehreren Feldgeräten, die über digital kommunizierende Schnittstellen zur Anbindung an Bussysteme oder zur Verbindung mit einem Konfigurationsrechner ausgestattet sind. Erfindungsgemäß kann die Inbetriebnahme eines oder mehrerer Feldgeräte über die Bediensoftware vereinfacht werden.

Auf der Recheneinheit 1 kann eine Feldgerätebediensoftware ausgeführt werden, um das Feldgerät zu bedienen. Bei dieser Feldgerätebediensoftware handelt es sich beispielsweise um eine FDT-Rahmenanwendung, FDI-Hosts oder um DD-Hosts. Insbesondere die FDT-Rahmenanwendungen können nicht nur für die gängigsten normierten Bussysteme eingesetzt werden, sondern sie erlauben auch den Einsatz an den Konfigurationsschnittstellen von Geräten, wenn darüber private Protokolle kommuniziert werden.

Diesen Systemen gemeinsam ist, dass sie für sich gesehen noch nicht nutzbar sind. Die Nutzbarkeit wird erst dadurch erreicht, dass für die zu bedienenden Feldgeräte die zugehörigen Gerätetreiber geladen werden. Im Falle von FDT sind dies die sog. DTMs, im Falle der DD-Hosts die DDs.

Damit der Benutzer über die Bedienoberfläche auf der Recheneinheit dann aber tatsächlich mit einem Feldgerät kommunizieren kann, muss zuvor noch die tatsächlich verwendete Topologie der realen Geräte des Feldgerätesystems bzw. des Feldgerätenetzwerks innerhalb der Bedienoberfläche nachgebildet werden.

Ein Beispiel für eine reale Topologie ist in Fig. 1 dargestellt. In diesem Beispiel ist die Recheneinheit 1 über eine USB-Schnittstelle 2 mit dem Feldgerät 3 verbunden. Im Beispiel der Fig. 2 ist eine Recheneinheit 1 über eine USB-Schnittstelle 2 mit einem Kommunikationsadapter 5 verbunden. Dieser wiederum ist über eine serielle Schnittstelle 4 kabelgebunden oder kabellos mit dem Feldgerät 3 verbunden.

Aufgrund der Tatsache, dass das Erkennen des angeschlossenen Geräts in der Feldgerätebediensoftware über einen Topology-Scan, also die zyklische Überwachung, erfolgt, ist die Funktionalität nicht auf reine Direktverbindungen zu einem Feldgerät beschränkt. Es ist beispielsweise auch möglich, dass an der Schnittstelle ein Schnittstellenadapter (wie in Fig. 2 dargestellt) erkannt wird, und in der Folge die Feldgerätebediensoftware über den Topology-Scan ermittelt, dass am Kommunikationsadapter als weiteres Gerät ein Feldgerät angeschlossen ist. In diesem Fall baut dann der Topology-Scan zwei Gerätetreiber in der passenden Netzstruktur auf.

Will nun ein Anwender am Feldgerät 3 Einstellungen vornehmen, so muss er nicht mehr zunächst das virtuelle Projekt gemäß dem realen Netzwerk mittels der richtigen Gerätetreiber nachbilden. Insbesondere ist es nicht mehr erforderlich, dass der Anwender in den Beispielen der Fig. 1 und 2, wenn er an dem Feldgerät 3 Einstellungen vornehmen will, unterschiedliche Projektstrukturen nachbilden muss.

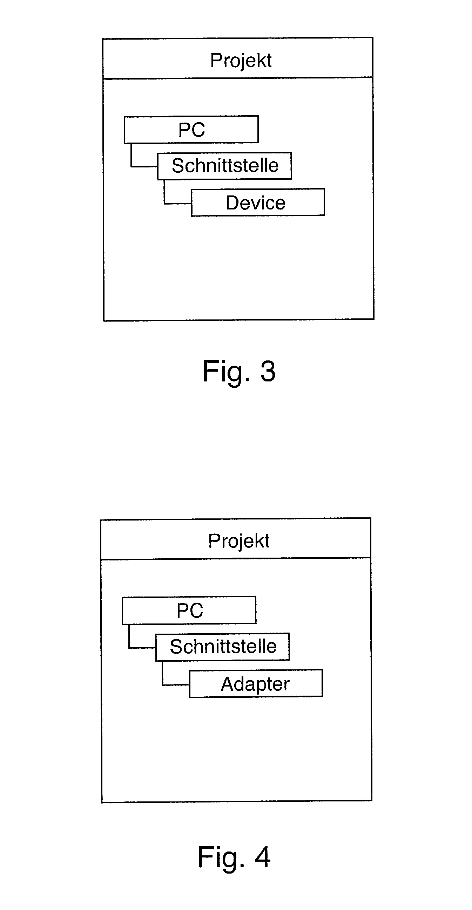

Fig. 3 zeigt das Projekt gemäß Fig. 1 und Fig. 4 zeigt das Projekt gemäß Fig. 2.

Vielmehr reicht es, wenn der Anwender das USB-Kabel in den USB-Port der Recheneinheit einsteckt. Selbstverständlich kann auch eine andere Kommunikationsschnittstelle zur Verbindung mit dem Feldgerät oder dem Kommunikationsadapter vorgesehen sein, insbesondere auch eine drahtlose Schnittstelle zur Funkkommunikation mit dem Feldgerät oder dem Kommunikationsadapter.

Daraufhin erfolgt automatisch der Start des passenden Gerätetreibers des angeschlossenen Feldgerätes, dessen Bedienoberfläche dann am Bildschirm der Recheneinheit erscheint, so dass die Inbetriebnahme, Wartung und/oder die Parametrierung des Feldgerätes unverzüglich vorgenommen werden kann.

Diese Anforderung wird dadurch erfüllt, dass für die Feldgerätebediensoftware eine zweite Softwarekomponente als Prozess oder Dienst permanent im Hintergrund läuft. Die zweite Softwarekomponente überwacht die Schnittstellen der Recheneinheit (USB, COM-Port, Ethernet, usw.) und prüft zyklisch, ob ein Feldgerät angeschlossen wurde, welches der entsprechenden Bediensoftware zugeordnet werden kann. Wurde ein Feldgerät erkannt, dann startet die zweite Softwarekomponente die eigentliche Bediensoftware und baut automatisch das passende "virtuelle Projekt" mit dem zugehörigen Gerätetreiber auf. Im nächsten Schritt wird dann der Gerätetreiber des Feldgerätes geöffnet und die Feldgerätedaten werden automatisch in den Treiber geladen. Nun kann der Anwender ohne langes Suchen sofort mit der Einstellung des Feldgerätes beginnen.

In einer weiteren Ausgestaltung der Erfindung bietet das Bedienprogramm, bei der es sich beispielsweise um eine FDT-Rahmenanwendung handelt, eine Möglichkeit, dass es ohne eigene Bedienoberfläche gestartet werden kann. Es verwaltet zwar die Gerätetreiber und bietet die FDT-Funktionalität für Topologie und Kommunikationsfunktion, bietet aber keine eigene Benutzerschnittstelle. Kombiniert man das Bedienprogramm ohne Benutzerschnittstelle mit der oben genannten Erfindung, so sieht der Anwender, nachdem er das Feldgerät mit der Schnittstelle des Rechners verbunden hat, auf seinem Bildschirm weiter nichts, als genau den geöffneten Gerätetreiber für das angeschlossene Feldgerät.

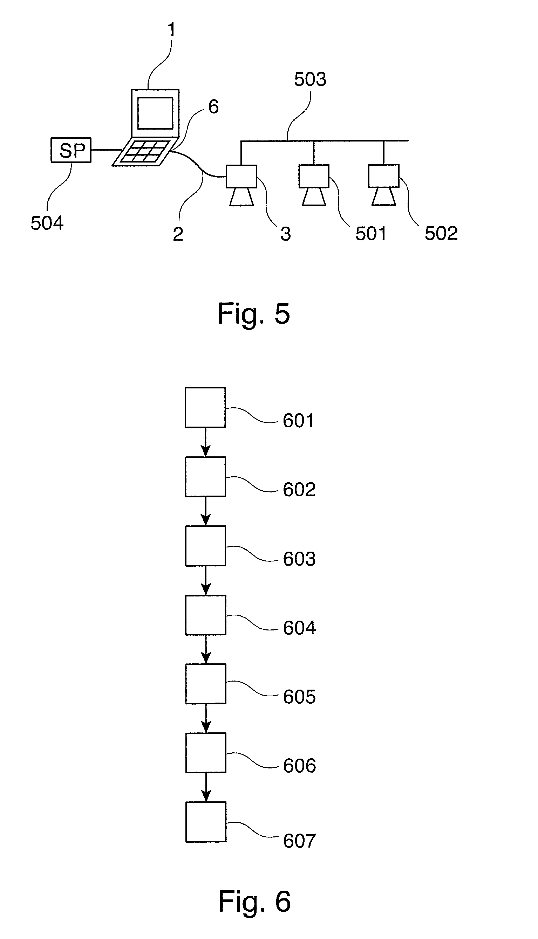

Fig. 5 zeigt ein Sensornetzwerk gemäß einem weiteren Ausführungsbeispiel der Erfindung. Die Recheneinheit 1 weist einen externen Speicher 504 auf, der auch als computerlesbares Medium bezeichnet werden kann. In diesem Speicher sind die zur Durchführung des erfindungsgeinäßen Verfahrens notwendigen Programmelemente gespeichert.

Über ein Schnittstellenkabel 2 ist die Recheneinheit 1 an ein Feldgerät 3 oder direkt an den Bus 503 angeschlossen. An den Bus sind noch weitere Feldgeräte 501, 502 angeschlossen.

Aufgrund der zyklischen Überwachung der Kommunikationsschnittstelle 6 der Recheneinheit 1 erkennt die Recheneinheit, dass sie mit dem Feldgerät 3 verbunden wurde und/oder an den Bus 503 angeschlossen wurde.

Daraufhin wird innerhalb der Recheneinheit automatisch festgestellt, ob die Feldgeräte 3, 501, 502 einer bestimmten Feldgerätebediensoftware, die auf der Recheneinheit läuft, geöffnet werden können. Der Benutzer kann nun auswählen, ob er die Feldgerätebediensoftware des Feldgerätes 3, die Feldgerätebediensoftware des Feldgerätes 501 und/oder die Feldgerätebediensoftware des Feldgerätes 502 starten möchte. Auch kann die Feldgerätebediensoftware für jedes der drei Feldgeräte automatisch gestartet werden.

Nun werden die Gerätetreiber derjenigen Feldgeräte automatisch bestimmt, für welche die Bediensoftware gestartet wurde. Daraufhin werden die Gerätetreiber auf der Recheneinheit automatisch geladen und ausgeführt. Davor kann vorgesehen sein, dass eine Benutzerabfrage erfolgt, welcher Gerätetreiber als nächstes geladen und/oder ausgeführt werden soll.

Es ist anzumerken, dass, obgleich in der Fig. 5 drei Feldgeräte gezeigt sind, das Verfahren auch für komplexere Feldgerätenetzwerke mit mehr als drei Feldgeräten ausgeführt sein kann.

Fig. 6 zeigt ein Flussdiagramm eines Verfahrens gemäß einem Ausführungsbeispiel der Erfindung. In Schritt 601 erfolgt eine automatische zyklische Überwachung der Kommunikationsschnittstelle der Recheneinheit. In Schritt 602 wird ein Feldgerät an die Kommunikationsschnittstelle angeschlossen und in Schritt 603 wird dies von der Überwachungssoftware erkannt. In Schritt 604 wird dann automatisch festgestellt, dass das angeschlossene Feldgerät einer Feldgerätebediensoftware auf der Recheneinheit zugeordnet werden kann und in Schritt 605 wird diese Feldgerätebediensoftware automatisch gestartet und auf der Recheneinheit ausgeführt. Danach wird in Schritt 606 der passende Gerätetreiber bestimmt und in Schritt 607 hochgeladen und auf der Recheneinheit ausgeführt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Bedienen eines Feldgerätes (3) in der Prozessautomation, das Verfahren aufweisend die Schritte:
automatische zyklische Überwachung einer Kommunikationsschnittstelle (6) einer Recheneinheit (1);
automatisches Feststellen, ob ein Feldgerät (3) oder ein Kommunikationsgerät (5) eines Feldgerätes (3) an die Kommunikationsschnittstelle (6) angeschlossen ist, welches einer Feldgerätebediensoftware auf der Recheneinheit (1) zugeordnet werden kann;
automatisches Ausführen der Feldgerätebediensoftware, wenn das Feldgerät (3) oder das Kommunikationsgerät (5) der Feldgerätebediensoftware auf der Recheneinheit (1) zugeordnet werden kann;
automatisches Bestimmen eines für das angeschlossene Feldgerät (3) passenden Gerätetreibers;
automatisches Laden des passenden Gerätetreibers zur Ausführung auf der Recheneinheit (1).

2. Verfahren nach Anspruch 1,
wobei die zyklische Überwachung der Kommunikationsschnittstelle (6) und das Feststellen, ob ein Feldgerät (3) an die Kommunikationsschnittstelle angeschlossen ist, welches einer Feldgerätebediensoftware auf der Recheneinheit (1) zugeordnet werden kann, durch ein von der Feldgerätebediensoftware unabhängiges Programmelement erfolgt.

3. Verfahren nach einem der vorhergehenden Ansprüche,
wobei es sich bei dem Feldgerät (3) um ein Füllstandmessgerät, ein Druckmessgerät, ein Durchflussmessgerät, ein Grenzstanderfassungsgerät oder ein Temperaturmessgerät handelt.

4. Verfahren nach einem der vorhergehenden Ansprüche,
wobei es sich bei der Kommunikationsschnittstelle (6) um eine USB-Schnittstelle, einen COM-Port oder eine Ethernet-Schnittstelle handelt.

5. Verfahren nach einem der vorhergehenden Ansprüche,
wobei es sich bei der Feldgerätebediensoftware um eine Software nach einem der Standards Field Device Tool (FDT), Electronic Device Description (EDD) oder Field Device Integration (FDI) handelt.

6. Programmelemente, die, wenn sie auf einem Prozessor einer Recheneinheit (l) ausgeführt werden, die Recheneinheit (1) dazu veranlassen, die folgenden Schritte durchzuführen:
automatische zyklische Überwachung einer Kommunikationsschnittstelle (6) einer Recheneinheit (1);
automatisches Feststellen, ob ein Feldgerät (3) oder ein Kommunikationsgerät (5) eines Feldgerätes (3) an die Kommunikationsschnittstelle (6) angeschlossen ist, welches einer Feldgerätebediensoftware auf der Recheneinheit (1) zugeordnet werden kann;
automatisches Ausführen der Feldgerätebediensoftware, wenn das Feldgerät (3) oder das Kommunikationsgerät (5) der Feldgerätebediensoftware auf der Recheneinheit (1) zugeordnet werden kann;
automatisches Bestimmen eines für das angeschlossene Feldgerät (3) passenden Gerätetreibers;
automatisches Laden des passenden Gerätetreibers zur Ausführung auf der Recheneinheit (1).

7. Computerlesbares Medium (504), auf dem Programmelemente gespeichert sind, die, wenn sie auf einem Prozessor einer Recheneinheit (1) ausgeführt werden, die Recheneinheit dazu veranlassen, die folgenden Schritte durchzuführen:
automatische zyklische Überwachung einer Kommunikationsschnittstelle (6) einer Recheneinheit (1);
automatisches Feststellen, ob ein Feldgerät (3) oder ein Kommunikationsgerät (5) eines Feldgerätes (3) an die Kommunikationsschnittstelle (6) angeschlossen ist, welches einer Feldgerätebediensoftware auf der Recheneinheit (1) zugeordnet werden kann;
automatisches Ausführen der Feldgerätebediensoftware, wenn das Feldgerät (3) oder das Kommunikationsgerät (5) der Feldgerätebediensoftware auf der Recheneinheit (1) zugeordnet werden kann;
automatisches Bestimmen eines für das angeschlossene Feldgerät (3) passenden Gerätetreibers;
automatisches Laden des passenden Gerätetreibers zur Ausführung auf der Recheneinheit (1).

8. Recheneinheit (1), auf der Programmelemente nach Anspruch 6 gespeichert sind.

## Geänderte Patentansprüche

### Geänderte Patentansprüche gemäss Regel 137(2) EPÜ.

**1.** Verfahren zum Bedienen eines Feldgerätes (3) in der Prozessautomation, das Verfahren aufweisend die Schritte:
automatische zyklische Überwachung einer Kommunikationsschnittstelle (6) einer Recheneinheit (1);
automatisches Feststellen, ob ein Feldgerät (3) oder ein Kommunikationsgerät (5) eines Feldgerätes (3) an die Kommunikationsschnittstelle (6) angeschlossen ist, welches einer Feldgerätebediensoftware auf der Recheneinheit (1) zugeordnet werden kann;
automatisches Ausführen der Feldgerätebediensoftware, wenn das Feldgerät (3) oder das Kommunikationsgerät (5) der Feldgerätebediensoftware auf der Recheneinheit (1) zugeordnet werden kann;
automatisches Bestimmen eines für das angeschlossene Feldgerät (3) passenden Gerätetreibers;
automatischer Start des passenden Gerätetreibers auf der Recheneinheit (1);
automatisches Laden der Feldgerätedaten in den Gerätetreiber.

**2.** Verfahren nach Anspruch 1,
wobei die zyklische Überwachung der Kommunikationsschnittstelle (6) und das Feststellen, ob ein Feldgerät (3) an die Kommunikationsschnittstelle angeschlossen ist, welches einer Feldgerätebediensoftware auf der Recheneinheit (1) zugeordnet werden kann, durch ein von der Feldgerätebediensoftware unabhängiges Programmelement erfolgt.

**3.** Verfahren nach einem der vorhergehenden Ansprüche,
wobei es sich bei dem Feldgerät (3) um ein Füllstandmessgerät, ein Druckmessgerät, ein Durchflussmessgerät, ein Grenzstanderfassungsgerät oder ein Temperaturmessgerät handelt.

**4.** Verfahren nach einem der vorhergehenden Ansprüche,
wobei es sich bei der Kommunikationsschnittstelle (6) um eine USB-Schnittstelle, einen COM-Port oder eine Ethernet-Schnittstelle handelt.

**5.** Verfahren nach einem der vorhergehenden Ansprüche,
wobei es sich bei der Feldgerätebediensoftware um eine Software nach einem der Standards Field Device Tool (FDT), Electronic Device Description (EDD) oder Field Device Integration (FDI) handelt.

**6.** Programmelemente, die, wenn sie auf einem Prozessor einer Recheneinheit (1) ausgeführt werden, die Recheneinheit (1) dazu veranlassen, die folgenden Schritte durchzuführen:
automatische zyklische Überwachung einer Kommunikationsschnittstelle (6) einer Recheneinheit (1);
automatisches Feststellen, ob ein Feldgerät (3) oder ein Kommunikationsgerät (5) eines Feldgerätes (3) an die Kommunikationsschnittstelle (6) angeschlossen ist, welches einer Feldgerätebediensoftware auf der Recheneinheit (1) zugeordnet werden kann;
automatisches Ausführen der Feldgerätebediensoftware, wenn das Feldgerät (3) oder das Kommunikationsgerät (5) der Feldgerätebediensoftware auf der Recheneinheit (1) zugeordnet werden kann;
automatisches Bestimmen eines für das angeschlossene Feldgerät (3) passenden Gerätetreibers;
automatische Start des passenden Gerätetreibers auf der Recheneinheit (1);
automatisches Laden der Feldgerätedaten in den Gerätetreiber.

**7.** Computerlesbares Medium (504), auf dem Programmelemente gespeichert sind, die, wenn sie auf einem Prozessor einer Recheneinheit (1) ausgeführt werden, die Recheneinheit dazu veranlassen, die folgenden Schritte durchzuführen:
automatische zyklische Überwachung einer Kommunikationsschnittstelle (6) einer Recheneinheit (1);
automatisches Feststellen, ob ein Feldgerät (3) oder ein Kommunikationsgerät (5) eines Feldgerätes (3) an die Kommunikationsschnittstelle (6) angeschlossen ist, welches einer Feldgerätebediensoftware auf der Recheneinheit (1) zugeordnet werden kann;
automatisches Ausführen der Feldgerätebediensoftware, wenn das Feldgerät (3) oder das Kommunikationsgerät (5) der Feldgerätebediensoftware auf der Recheneinheit (1) zugeordnet werden kann;
automatisches Bestimmen eines für das angeschlossene Feldgerät (3) passenden Gerätetreibers;
automatischer Start des passenden Gerätetreibers auf der Recheneinheit (1);
automatisches Laden der Feldgerätedaten in den Gerätetreiber.

**8.** Recheneinheit (1), auf der Programmelemente nach Anspruch 6 gespeichert sind.

**9.** Sensornetzwerk mit mehreren Feldgeräten (3, 501, 502) und einer Recheneinheit nach Anspruch 8.
